# EUROPEAN PATENT APPLICATION

(11) **EP 4 436 260 A1**
(43) Date of publication of application: **25.09.2024**
(21) Application number: 22913523.1
(22) Date of filing: 15.09.2022
(51) Int. Cl.: H04W 40/36, H04W 36/12, H04W 24/10, H04L 45/60

(54) **INTERNET ACCESS METHOD FOR ROUTING DEVICES IN WI-FI MESH, AND ROUTING DEVICE, MANAGEMENT SYSTEM, AND MEDIUM**

(30) Priority: 30.12.2021 CN 202111647127
(71) Applicant: ZTE Corporation, Shenzhen, Guangdong 518057 (CN)
(72) Inventor: LIU, Chuan, Shenzhen, Guangdong 518057 (CN)
(74) Representative: Fioravanti, Corrado
(86) International application number: PCT/CN2022/119091
(87) International publication number: WO 2023/124256

(57) **Abstract**

Embodiments of the present invention relate to the field of communications technologies, and provide a network access method for a routing device in a Wireless Fidelity (WiFi) mesh, a routing device, a management system, and a medium. In the embodiments of the present invention, the network access method performed by a sub routing device includes: sending, after detecting that the sub routing device accesses a network, a connection success message to a main routing device in the WiFi mesh, and triggering the main routing device to switch a default route of the main routing device to a bridge connecting to the sub routing device; switching a default route of the sub routing device to a Wide Area Network (WAN) port of the sub routing device; and sending received data to an upstream network through the WAN port of the sub routing device, wherein the received data includes data sent by the main routing device through the bridge. The solution can implement convenient switching of a network access device in a WiFi mesh and improve network access experience of a user.

## Description

### Technical Field

Embodiments of the present invention relate to the field of communications technologies, and in particular, to a network access method for a routing device in a Wireless Fidelity (WiFi) mesh, a routing device, a management system, and a medium.

### Background

In a WiFi mesh network, only a main router (also referred to as a main routing device) can connect to an upstream network, while a sub-router (also referred to as a sub routing device) can only access the network through the main router. Most devices on the market that support WiFi mesh functionality are designated as either the main routers or the sub-routers when they leave the factory. For some other devices that support the WiFi mesh functionality, although there is no pre-designated main router, the main router will be designated during the network formation process, and still, only the main router can connect to the upstream network for network access. If a user chooses a device with weak performance as the main router, the user may have a degraded internet experience. In a WiFi mesh, once the main router is connected to the internet, the user cannot arbitrarily change the routing device used for connecting to the upstream network.

If a user wants to change a routing device for accessing the network, the networking of the WiFi mesh needs to be conducted again, which makes the process of switching a network access device in the WiFi mesh very complex, and significantly degrades the user experience.

### Summary

The embodiments of the present invention provide a network access method for a routing device in a WiFi mesh, a routing device, a management system, and a medium, which may implement convenient switching of a network access device in a WiFi mesh and improve the network access experience of the user.

The embodiments of the present invention provide a network access method for a routing device in a WiFi mesh. The network access method is performed by a sub routing device in the WiFi mesh, and includes: sending, after detecting that the sub routing device accesses a network, a connection success message to a main routing device in the WiFi mesh, and triggering the main routing device to switch a default route of the main routing device to a bridge connecting to the sub routing device; switching a default route of the sub routing device to a Wide Area Network (WAN) port of the sub routing device; and sending received data to an upstream network through the WAN port of the sub routing device, wherein the received data includes data sent by the main routing device through the bridge.

The embodiments of the present invention further provide a network access method for a routing device in a WiFi mesh. The network access method is performed by a main routing device in the WiFi mesh, and includes: receiving a connection success message sent by a sub routing device in the WiFi mesh; switching a default route of the main routing device to a bridge connecting to the sub routing device; and sending received data to the sub routing device through the bridge.

The embodiments of the present invention further provide a sub routing device, including: an interaction module, configured to send, after detecting that the sub routing device accesses a network, a connection success message to a main routing device in a WiFi mesh, and trigger the main routing device to switch a default route of the main routing device to a bridge connecting to the sub routing device; a route switching module, configured to switch a default route of the sub routing device to a WAN port of the sub routing device; and a data transmission module, configured to send received data to an upstream network through the WAN port of the sub routing device, wherein the received data includes data sent by the main routing device through the bridge.

The embodiments of the present invention further provide a main routing device, including: an interaction module, configured to receive a connection success message sent by a sub routing device in the WiFi mesh; a route switching module, configured to switch a default route of the main routing device to a bridge connecting to the sub routing device; and a data transmission module, configured to send received data to the sub routing device through the bridge.

The embodiments of the present invention further provide a routing device management system, including at least one foregoing sub routing device and the foregoing main routing device, where the at least one sub routing device is connected to the main routing device.

The embodiments of the present invention further provide a computer-readable storage medium storing a computer program. The computer program, when being executed by a processor, causes the processor to implement the network access method for the routing device in the WiFi mesh.

In the embodiments of the present invention, a sub routing device in a WiFi mesh sends, after detecting that the sub routing device accesses a network, a connection success message to a main routing device in the WiFi mesh, and triggers the main routing device to switch a default route of the main routing device to a bridge connecting to the sub routing device; the sub routing device switches a default route of the sub routing device to a WAN port of the sub routing device; and sends received data to an upstream network through the WAN port of the sub routing device, wherein the received data includes data sent by the main routing device through the bridge. By virtue of the solution, data received by all routing devices in the WiFi mesh can be uploaded to the network through the WAN port of the sub routing device. The solution may achieve a quick opening of the upstream data transmission link after switching of the network access device in the WiFi mesh. In other words, the scheme may implement convenient switching of a network access device in a WiFi mesh, ensure the normal operation of the upload services, and efficiently improve the experience of a user.

### Brief Description of the Drawings

One or more embodiments are illustratively described through the corresponding figures in the drawings. These illustrative descriptions do not constitute limitations on the embodiments. Components with the same reference numerals in the drawings represent similar components, unless otherwise stated, and the drawings do not constitute scale limitations.
Fig. 1 is a flowchart of a network access method for a routing device in a WiFi mesh according to an embodiment of the present invention;
Fig. 2 is a flowchart of a network access method for a routing device in a WiFi mesh according to another embodiment of the present invention;
Fig. 3 is a schematic structural diagram of a sub routing device according to an embodiment of the present invention;
Fig. 4 is a schematic structural diagram of a main routing device according to an embodiment of the present invention; and
Fig. 5 is a schematic structural diagram of a routing device according to an embodiment of the present invention.

### Detailed Description

To make the objectives, technical solutions, and advantages of the embodiments of the present invention clearer, respective embodiments of the present invention are described as follows in detail with reference to the accompanying drawings. However, those skilled in the art may understand that, in the embodiments of the present invention, many technical details are put forward to enable a reader to better understand the embodiments of the present invention. However, even without these technical details and based on various changes and modifications of the following embodiments, the claimed technical solutions of the embodiments of the present invention can still be implemented.

An embodiment of the present invention relates to a network access method for a routing device in a WiFi mesh. The network access method is performed by a sub routing device in the WiFi mesh.

In the present embodiment, a sub routing device in a WiFi mesh sends, after detecting that the sub routing device accesses a network, a connection success message to a main routing device in the WiFi mesh, and triggers the main routing device to switch a default route of the main routing device to a bridge connecting to the sub routing device; the sub routing device switches a default route of the sub routing device to a WAN port of the sub routing device; and sends received data to an upstream network through the WAN port of the sub routing device, wherein the received data includes data sent by the main routing device through the bridge.

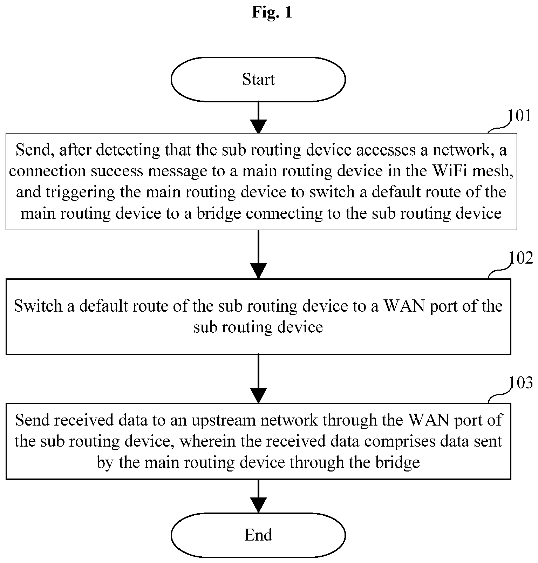

The implementation details of the network access method for the routing device in the WiFi mesh in the present embodiment are described in detail as follows. The following content is only for ease of understanding the implementation details of this solution, and is not essential for implementing this solution. As shown in Fig. 1, the specific process may include the following operations 101 to 103.

At operation 101, a sub routing device in a WiFi mesh sends, after detecting that the sub routing device accesses a network, a connection success message to a main routing device in the WiFi mesh, and triggers the main routing device to switch a default route of the main routing device to a bridge connecting to the sub routing device. The bridge involved herein is a channel for data transmission between the main routing device and the sub routing device in the WiFi mesh.

The main routing device and the sub routing device implement different functions in the WiFi mesh, and configuration manners for the main routing device and the sub routing device are generally different when they leave the factory. Generally, the default route of the main routing device is a WAN port of the main routing device, and a default route of the sub routing device is a bridge connecting to the main routing device.

In this operation, after detecting that the sub routing device accesses the network, the sub routing device sends the connection success message to the main routing device. After learning that the sub routing device accesses the network (that is, the sub routing device is connected to the network), the main routing device switches the default route to the bridge connecting to the sub routing device. In this way, the data received by the main routing device may be sent to the sub routing device through the bridge, and then the sub routing device uploads the data to the network.

In an example, the operation that the sub routing device sends, after detecting that the sub routing device accesses the network, the connection success message to the main routing device in the WiFi mesh may include: after detecting that the sub routing device accesses a wireless network, or after detecting that the WAN port of the sub routing device is connected with a network cable and an Internet Protocol (IP) address is acquired, the sub routing device sends the connection success message to the main routing device in the WiFi mesh. In the present embodiment, detecting that the WAN port of the sub routing device is connected with the network cable and the IP address is acquired indicates that the sub routing device accesses the wired network.

That is, in the present embodiment, the sub routing device may detect whether the sub routing device accesses the network in two manners. The IP address is acquired through a Point-to-Point Protocol over Ethernet (PPPOE), or a Dynamic Host Configuration Protocol (DHCP).

At operation 102, the sub routing device switches a default route of the sub routing device to a WAN port of the sub routing device.

In this operation, the sub routing device switches the default route from the bridge connecting the sub routing device to the main routing device, to the WAN port of the sub routing device.

It should be noted that, the switching of the default route of the routing device involved in the foregoing two operations may be implemented by setting an advanced routing module in the corresponding routing device. In some exemplary implementations, the advanced routing module may be a small chip integrated in the routing device and capable of implementing functions such as route switching.

At operation 103, the sub routing device sends received data to an upstream network through the WAN port of the sub routing device, wherein the received data includes data sent by the main routing device through the bridge.

The data sent to the sub routing device by the main routing device through the bridge in this operation may include data of user equipment received by other sub routing devices subordinate to the main routing device and data of user equipment subordinate to the main routing device. Through this operation, data received by all routing devices in the WiFi mesh can be uploaded to the network through the WAN port of the sub routing device.

In an example, a routing device for connecting to the upstream network in the WiFi mesh may be switched to the main routing device. In the present embodiment, after sending the received data to the upstream network through the WAN port of the sub routing device, the network access method may further include: the default route is switched to the bridge in a case of receiving a connection success message sent by the main routing device.

In the present embodiment, after detecting that the main routing device accesses the network, the main routing device sends a connection success message to the sub routing device in the WiFi mesh. The sub routing device switches the default route from the WAN port to the bridge. In this way, the sub routing device sends the received data to the main routing device through the bridge, and then the data is set to the upstream network through the main routing device.

In practical implementation, the main routing device may detect whether the main routing device accesses the network, and simultaneously, the sub routing device may detect whether the sub routing device accesses the network, so that the default route may be switched after performing information interaction. By using the method provided in the embodiments of the present invention, a network access device may be automatically determined and a link for uploading data may be adjusted without a manual operation of a user when the network access device changes, thereby implementing convenient and dynamic switching of the network access device. Furthermore, during the process of the user accessing the network with the same information, e.g., the same password, the switching of the network access device is imperceptible to the user. It is worth mentioning that when multiple routing devices in the WiFi mesh have similar performance, the network access method for the routing device in the WiFi mesh provided by this embodiment allows the user to conveniently choose any device as the device for accessing the upstream network.

In the present embodiment, a sub routing device in a WiFi mesh sends, after detecting that the sub routing device accesses a network, a connection success message to a main routing device in the WiFi mesh, and triggers the main routing device to switch a default route of the main routing device to a bridge connecting to the sub routing device; the sub routing device switches a default route of the sub routing device to a WAN port of the sub routing device; and sends received data to an upstream network through the WAN port of the sub routing device, wherein the received data includes data sent by the main routing device through the bridge. By virtue of the solution, data received by all routing devices in the WiFi mesh can be uploaded to the network through the WAN port of the sub routing device. The solution may achieve a quick opening of the upstream data transmission link after switching of the network access device in the WiFi mesh. In other words, the scheme may implement convenient switching of a network access device in a WiFi mesh, ensure the normal operation of the upload services, and efficiently improve the experience of a user.

Another embodiment of the present invention relates to a network access method for a routing device in a WiFi mesh. The network access method is performed by a main routing device in the WiFi mesh.

In the present embodiment, the main routing device in the WiFi mesh receives a connection success message sent by a sub routing device in the WiFi mesh; switches a default route of the main routing device to a bridge connecting to the sub routing device; and sends received data to the sub routing device through the bridge.

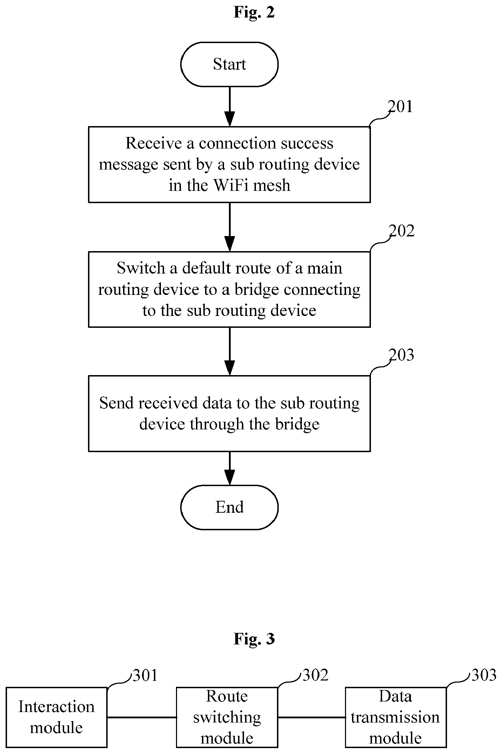

The implementation details of the network access method for the routing device in the WiFi mesh in the present embodiment are described in detail as follows. The following content is only for ease of understanding the implementation details of this solution, and is not essential for implementing this solution. As shown in Fig. 2, the specific process may include the following operations 201 to 203.

At operation 201, a main routing device in a WiFi mesh receives a connection success message sent by a sub routing device in the WiFi mesh.

In this operation, the network access device in the WiFi mesh is the sub routing device. After the sub routing device accesses the network in the uplink direction, the main routing device receives the connection success message sent by the sub routing device in the WiFi mesh.

At operation 202, the main routing device switches a default route of the main routing device to a bridge connecting to the sub routing device.

In this operation, because the main routing device no longer serves as the device for accessing the network (also referred to as the network access device) in the WiFi mesh, the main routing device switches the default route from a WAN port of the main routing device to a bridge connecting to the sub routing device, so that the main routing device may send uplink data through the bridge.

At operation 203, the main routing device sends received data to the sub routing device through the bridge.

In this operation, the main routing device sends the received data to the sub routing device through the bridge. The data received by the main routing device includes data of user equipment received by other sub routing devices subordinate to the main routing device, and data of user equipment subordinate to the main routing device. In this way, all data received by all routing devices in the WiFi mesh can be uploaded to the network through the sub routing device.

In an example, a routing device for connecting to the upstream network in the WiFi mesh may be switched from the sub routing device to the main routing device. In the present embodiment, after detecting that the main routing device accesses a network, the main routing device sends a connection success message to the sub routing device, and triggers the sub routing device to switch a default route of the sub routing device to the bridge; switches a default route of the main routing device to a WAN port of the main routing device; and sends the received data to an upstream network through the WAN port of the main routing device.

In the present embodiment, data received by all routing devices in the WiFi mesh can be uploaded to the network through the WAN port of the main routing device. The solution may achieve a quick opening of the upstream data transmission link after switching of the network access device in the WiFi mesh to the main routing device.

In the present embodiment, after receiving the connection success message sent by the sub routing device, the main routing device in the WiFi mesh switches the default route to the bridge connecting to the sub routing device. In this way, after the network access device in the WiFi mesh is switched to the sub routing device, the data received by the main routing device can be sent to the sub routing device through the bridge, thereby implementing uploading of the data through the sub routing device. The main routing device sends the received data to the sub routing device through the bridge, so that data received by all routing devices in the WiFi mesh can be uploaded to the network through the sub routing device. The solution may achieve a quick opening of the upstream data transmission link after switching of the network access device in the WiFi mesh. In other words, the scheme may implement convenient switching of a network access device in a WiFi mesh, ensure the normal operation of the upload services, and efficiently improve the experience of a user.

An embodiment of the present invention relates to a sub routing device. As shown in Fig. 3, the sub routing device includes:
an interaction module 301, configured to send, after detecting that the sub routing device accesses a network, a connection success message to a main routing device in a WiFi mesh, and trigger the main routing device to switch a default route of the main routing device to a bridge connecting to the sub routing device;
a route switching module 302, configured to switch a default route of the sub routing device to a WAN port of the sub routing device; and;
a data transmission module 303, configured to send received data to an upstream network through the WAN port of the sub routing device, wherein the received data includes data sent by the main routing device through the bridge.

In an example, the interaction module 301 may be further configured to send the connection success message to the main routing device in the WiFi mesh after detecting that the sub routing device accesses a wireless network, or after detecting that the WAN port of the sub routing device is connected with a network cable and an IP address is acquired.

In an example, the sub routing device may further include: an IP address acquisition module (not shown in the figure), configured to acquire the IP address through a PPPOE or a DHCP.

The route switching module 302 may be further configured to switch, after sending the received data to the upstream network through the WAN port of the sub routing device, the default route to the bridge in a case of receiving a connection success message sent by the main routing device.

The sub routing device provided in the present embodiment sends, after detecting that the sub routing device accesses a network, a connection success message to a main routing device in the WiFi mesh, and triggers the main routing device to switch a default route of the main routing device to a bridge connecting to the sub routing device; the sub routing device switches a default route of the sub routing device to a WAN port of the sub routing device; and sends received data to an upstream network through the WAN port of the sub routing device, wherein the received data includes data sent by the main routing device through the bridge. By virtue of the solution, data received by all routing devices in the WiFi mesh can be uploaded to the network through the WAN port of the sub routing device. The solution may achieve a quick opening of the upstream data transmission link after switching of the network access device in the WiFi mesh. In other words, the scheme may implement convenient switching of a network access device in a WiFi mesh, ensure the normal operation of the upload services, and efficiently improve the experience of a user.

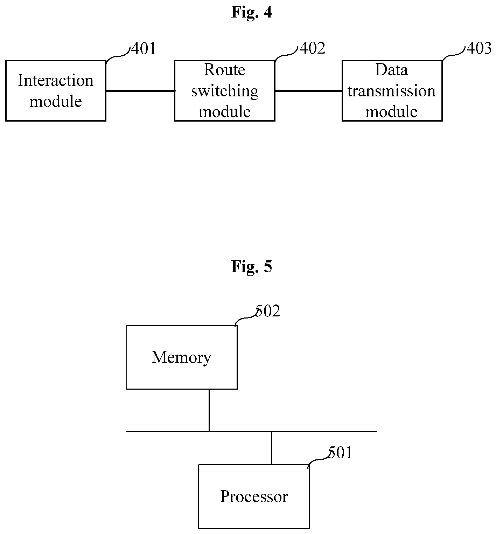

An embodiment of the present invention relates to a main routing device. As shown in Fig. 4, the main routing device includes:
an interaction module 401, configured to receive a connection success message sent by a sub routing device in a WiFi mesh;
a route switching module 402, configured to switch a default route of the main routing device to a bridge connecting to the sub routing device; and
a data transmission module 403, configured to send received data to the sub routing device through the bridge.

In an example, the interaction module 401 may be further configured to, after detecting that the main routing device accesses a network, send a connection success message to the sub routing device, and trigger the sub routing device to switch a default route of the sub routing device to the bridge. In the present embodiment, the route switching module 402 may be further configured to switch a default route of the main routing device to a WAN port of the main routing device; and the data transmission module 403 may also be configured to send the received data to an upstream network through the WAN port of the main routing device.

After receiving the connection success message sent by the sub routing device, the main routing device provided in the present embodiment switches the default route to the bridge connecting to the sub routing device. In this way, after the network access device in the WiFi mesh is switched to the sub routing device, the data received by the main routing device can be sent to the sub routing device through the bridge, thereby implementing uploading of the data through the sub routing device. The main routing device sends the received data to the sub routing device through the bridge, so that data received by all routing devices in the WiFi mesh can be uploaded to the network through the sub routing device. The solution may achieve a quick opening of the upstream data transmission link after switching of the network access device in the WiFi mesh. In other words, the scheme may implement convenient switching of a network access device in a WiFi mesh, ensure the normal operation of the upload services, and efficiently improve the experience of a user.

It should be noted that all modules involved in the foregoing embodiments of the present invention are logic modules. In a practical application, one logic unit may be one physical unit or a part of one physical unit, and may also be implemented by using a combination of a plurality of physical units. In addition, in order to highlight the innovative part of the embodiments of the present invention, the present embodiments have not introduced units less closely related to solving the technical problem proposed by the embodiments of the present invention, but this does not indicate that other units do not exist in the present embodiments.

Another embodiment of the present invention relates to a routing device management system, including at least one sub routing device as described in the above embodiments and a main routing device as described in the above embodiments. The at least one sub routing device is connected to the main routing device.

In an example, the route switching module of the main routing device may be further configured to switch a default route of the main routing device to a WAN port of the main routing device when a target routing device in a device switching instruction is the main routing device; or the route switching module of the main routing device may be further configured to switch a default route of the main routing device to a bridge connecting to a target routing device in a device switching instruction when the target routing device in the device switching instruction is not the main routing device. The device switching instruction is generated according to a device performance detection result.

In some exemplary implementations, the device performance detection result involved herein may include parameters such as a Personal Identification Number (PIN) code delay and a Time To Live (TTL) value of the routing device. When the routing device accessing the network in the WiFi mesh accesses a wireless network, the device performance detection result may further include a Received Signal Strength Indication (RSSI).

In this example, it may be determined, according to the device performance detection result, whether to switch a network access routing device and to which routing device to switch, so as to switch the network access routing device, thereby implementing convenient switching of a network access routing device in a WiFi mesh to a routing device with optimal performance.

Through comparison of the device performance detection results, it may be determined that the main routing device is a network access device with optimal performance in the WiFi mesh. In this case, the main routing device may switch a default route of the main routing device from a bridge connecting to a certain sub routing device, to a WAN port, and then send a switching device instruction to the sub routing device currently accessing the network, and trigger the sub routing device to switch the default route to the bridge connecting to the main routing device.

In another case, the main routing device compares the device performance detection result reported by the routing device currently accessing the network, or the device performance detection result of the main routing device with the device performance detection result of a historical routing device that used to access the network, and when the device performance detection result of the routing device currently accessing the network is worse than that of a certain historical routing device that used to access the network, the historical routing device that used to access the network is determined as a target routing device and the routing device for accessing the network is switched to the target routing device. The main routing device switches a default route of the main routing device from a WAN port or a bridge connecting to the sub routing device currently accessing the network, to a bridge connecting to the target routing device.

In the present embodiment, a plurality of routing devices in the WiFi mesh may access the network, and the device switching instruction may be generated according to the device performance detection result, thereby triggering switching of the routing device for accessing the network in the WiFi mesh. By virtue of the solution, a network access device may be conveniently switched to the routing device with optimal performance, without a manual operation of a user. This can effectively improve the user's experience of surfing the Internet.

An embodiment of the present invention further provides a routing device. As shown in Fig. 5, the routing device includes at least one processor 501, and a memory 502 communicatively connected to the at least one processor 501. The memory 502 stores an instruction that can be executed by the at least one processor 501, where the instruction is executed by the at least one processor 501, so that the at least one processor 501 can execute the foregoing network access method for the routing device in the WiFi mesh.

The memory 502 and the at least one processor 501 are connected via a bus. The bus may include any number of interconnected buses and bridges, and the bus connects various circuits of the at least one processor 501 and the memory 502 together. The bus may also connect a variety of other circuits, such as peripheral devices, voltage regulators, and power management circuitry, which are well known in the art and therefore are not described further herein. The bus interface provides an interface between the bus and the transceiver. A transceiver may be one element or multiple elements, such as multiple receivers and transmitters, that provide a means for communicating with various other devices over a transmission medium. The data processed by the at least one processor 501 is transmitted on a wireless medium through an antenna, and further, the antenna receives the data and transmits the data to the at least one processor 501.

The at least one processor 501 is responsible for managing a bus and general processing, and may further provide various functions, including timing, peripheral interfaces, voltage regulation, power management, and other control functions. The memory 502 may be used to store data used by the at least one processor 501 in performing operations.

The foregoing product may execute the network access method provided in the embodiments of the present invention, and has a corresponding functional module and beneficial effect for executing the network access method. For details of the technology that are not described in detail in the present embodiment, reference may be made to the network access method provided in the embodiments of the present invention.

An embodiment of the present invention further provides a computer-readable storage medium, which stores a computer program. The computer program implements, when being executed by a processor, the foregoing network access method for the routing device in the WiFi mesh.

Those skilled in the art may understand that all or a part of the operations of the network access method according to the embodiments of the present invention may be implemented by a program instructing relevant hardware. The program is stored in a storage medium, and includes several instructions for instructing a device (which may be a single chip, a chip, or the like) or a processor to execute all or a part of the operations of the network access method according to the embodiments of the present invention. The foregoing storage medium includes: any medium that can store program codes, such as a Universal Serial Bus (USB) flash disk, a removable hard disk, a Read-Only Memory (ROM), a Random Access Memory (RAM), a magnetic disk, or an optical disk.

The above-mentioned embodiments are provided to realize and use the embodiments of the present invention to those skilled in the art, and those skilled in the art can make various modifications or changes to the described embodiments without departing from the inventive concept of the embodiments of the present invention. Therefore, the scope of protection of the embodiments of the present invention is not limited by the described embodiments, and should comply with the maximum scope of the innovative features mentioned in the claims.

## Claims

1. A network access method for a routing device in a Wireless Fidelity, WiFi, mesh, wherein the network access method is performed by a sub routing device in the WiFi mesh, and comprises:
sending, after detecting that the sub routing device accesses a network, a connection success message to a main routing device in the WiFi mesh, and triggering the main routing device to switch a default route of the main routing device to a bridge connecting to the sub routing device;
switching a default route of the sub routing device to a Wide Area Network, WAN, port of the sub routing device; and
sending received data to an upstream network through the WAN port of the sub routing device, wherein the received data comprises data sent by the main routing device through the bridge.

2. The network access method for the routing device in the WiFi mesh according to claim 1, wherein sending, after detecting that the sub routing device accesses a network, a connection success message to a main routing device in the WiFi mesh comprises:
after detecting that the sub routing device accesses a wireless network, or after detecting that the WAN port of the sub routing device is connected with a network cable and an Internet Protocol, IP, address is acquired, sending the connection success message to the main routing device in the WiFi mesh.

3. The network access method for the routing device in the WiFi mesh according to claim 2, wherein the IP address is acquired through a Point-to-Point Protocol over Ethernet, PPPOE, or a Dynamic Host Configuration Protocol, DHCP.

4. The network access method for the routing device in the WiFi mesh according to any one of claims 1 to 3, wherein after sending received data to an upstream network through the WAN port of the sub routing device, the network access method further comprises:
switching the default route to the bridge in a case of receiving a connection success message sent by the main routing device.

5. A network access method for a routing device in a Wireless Fidelity, WiFi, mesh, wherein the network access method is performed by a main routing device in the WiFi mesh, and comprises:
receiving a connection success message sent by a sub routing device in the WiFi mesh;
switching a default route of the main routing device to a bridge connecting to the sub routing device; and
sending received data to the sub routing device through the bridge.

6. The network access method for the routing device in the WiFi mesh according to claim 5, wherein the network access method further comprises:
after detecting that the main routing device accesses a network, sending a connection success message to the sub routing device, and triggering the sub routing device to switch a default route of the sub routing device to the bridge;
switching a default route of the main routing device to a Wide Area Network, WAN, port of the main routing device; and
sending the received data to an upstream network through the WAN port of the main routing device.

7. A sub routing device, comprising:
an interaction module, configured to send, after detecting that the sub routing device accesses a network, a connection success message to a main routing device in a Wireless Fidelity, WiFi, mesh, and trigger the main routing device to switch a default route of the main routing device to a bridge connecting to the sub routing device;
a route switching module, configured to switch a default route of the sub routing device to a Wide Area Network, WAN, port of the sub routing device; and
a data transmission module, configured to send received data to an upstream network through the WAN port of the sub routing device, wherein the received data comprises data sent by the main routing device through the bridge.

8. A main routing device, comprising:
an interaction module, configured to receive a connection success message sent by a sub routing device in a Wireless Fidelity, WiFi, mesh;
a route switching module, configured to switch a default route of the main routing device to a bridge connecting to the sub routing device; and
a data transmission module, configured to send received data to the sub routing device through the bridge.

9. A routing device management system, comprising at least one sub routing device according to claim 7 and the main routing device according to claim 8, wherein the at least one sub routing device is connected to the main routing device.

10. The routing device management system according to claim 9, wherein the route switching module of the main routing device is further configured to switch a default route of the main routing device to a Wide Area Network, WAN, port of the main routing device when a target routing device in a device switching instruction is the main routing device; or the route switching module of the main routing device is further configured to switch a default route of the main routing device to a bridge connecting to a target routing device in a device switching instruction when the target routing device in the device switching instruction is not the main routing device; wherein the device switching instruction is generated according to a device performance detection result.

11. A computer-readable storage medium, storing a computer program, wherein the computer program, when being executed by a processor, causes the processor to implement the network access method for the routing device in the WiFi mesh according to any one of claims 1 to 6.
